# FASCICULE DE BREVET EUROPEEN

(11) **EP 0 740 086 B1**
(45) Date de publication et mention de la délivrance du brevet: **26.01.2000**
(21) Numéro de dépôt: 96400861.9
(22) Date de dépôt: 23.04.1996
(51) Int. Cl.: F16F 9/46, F16F 13/26, B60G 17/015

(54) **Agencement d'amortissement par laminage d'un fluide et système de suspension notamment de véhicule automobile, équipé d'un tel agencement d'amortissement**
Einrichtung zur Dämpfung durch Flüssigkeitsschichtung und Kraftfahrzeugaufhängungssystem mit einer solchen Dämpfungseinrichtung
Arrangement for damping by fluid lamination and motor vehicle suspension system equiped with such a damping arrangement

(30) Priorité: 27.04.1995 FR 9505084
(43) Date de publication de la demande: 30.10.1996
(73) Titulaire: AUTOMOBILES PEUGEOT, 75116 Paris (FR); AUTOMOBILES CITROEN, 92200 Neuilly-sur-Seine (FR)
(72) Inventeur: Doré, Jacques, 92700 Colombes (FR); Oustaloup, Alain, 33400 Talence (FR); Nouillant, Michel, 33400 Talence (FR); Moreau, Xavier, 33230 Coutras (FR)
(74) Mandataire: Berger, Helmut

(56) Documents cités:
- EP-A- 0 346 040
- WO-A-89/09891
- WO-A-92/12359
- DE-A- 3 316 025
- DE-C- 4 022 099
- DE-U- 9 210 834
- FR-A- 1 242 350
- US-A- 2 061 068
- US-A- 3 827 538
- PATENT ABSTRACTS OF JAPAN vol. 006, no. 249 (M-177), 8 Décembre 1982 & JP-A-57 146933 (AISHIN SEIKI KK), 10 Septembre 1982,
- PATENT ABSTRACTS OF JAPAN vol. 009, no. 268 (M-424), 25 Octobre 1985 & JP-A-60 113832 (TOUKAI GOMU KOGYO KK), 20 Juin 1985,
- PATENT ABSTRACTS OF JAPAN vol. 007, no. 012 (M-186), 19 Janvier 1983 & JP-A-57 171133 (KAYABA KOGYO KK), 21 Octobre 1982,

## Description

L'invention concerne un agencement d'amortissement des mouvements d'une masse par rapport à un support, du type décrit dans le préambule de la revendication 1.

Un agencement de ce type est connu par le brevet français n° 1 242 350. Dans cet agencement, le diaphragme s'oppose au passage du fluide et au débit et dévie l'écoulement de celui-ci de l'axe de l'agencement, ce qui complique la structure et l'agencement.

La présente invention a pour but de pallier cet inconvénient.

Pour atteindre ce but, la plaque selon l'invention est configurée pour permettre le passage du fluide à travers la plaque en aval de l'orifice, conformément à la partie caractéristique de la revendication 1.

D'autres caractéristiques de l'invention sont énoncées dans des revendications dépendantes.

L'invention concerne encore un système de suspension notamment de véhicule automobile, décrit dans la revendication indépendante 10 et caractérisé par le fait qu'un agencement d'amortissement selon l'invention est associé au système de déplacement du liquide du système de suspension.

D'autres caractéristiques de cette suspension font l'objet de revendications dépendantes 11 et 12.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

La figure 1 est une vue schématique en coupe d'un agencement d'amortissement selon la présente invention.

La figure 2 est une vue de dessus d'une plaque de variation des caractéristiques d'amortissement suivant la flèche II de la figure 1.

La figure 3 est une vue schématique, en coupe, d'un agencement d'amortissement pourvu de deux dispositifs de variation des caractéristiques d'amortissement selon l'invention, montés tête-bêche et chacun à écoulement de fluide unidirectionnel.

La figure 4 illustre un graphe du domaine de fonctionnement de l'agencement amortisseur selon la présente invention.

Les figures 5a et 5b illustrent, de façon schématique, l'application de l'agencement d'amortissement selon l'invention, à deux versions de suspension d'une roue de véhicule automobile.

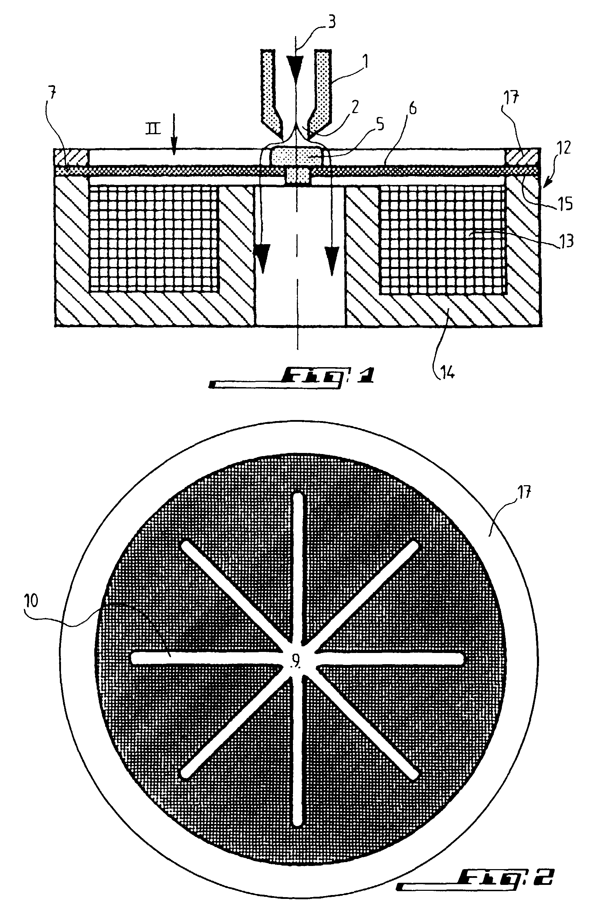

En se reportant à la figure 1, on constate qu'un agencement d'amortissement par laminage d'un fluide des mouvements d'une masse par rapport à un support auquel cette masse est reliée par l'intermédiaire d'un dispositif de suspension, comprend une buse 1 par l'orifice 2 de laquelle arrive le débit de fluide à laminer 3, et un clapet 5 placé au centre d'un empilage de plaques flexibles 6 formant un diaphragme. Les plaques sont réalisées en un matériau magnétique, présentent une forme circulaire et s'étendent perpendiculairement à l'axe de l'orifice. Les plaques sont encastrées au niveau de leur zone périphérique 7 dans un support approprié. Le clapet 5 est disposé en regard de l'orifice 2 de la buse 1 et l'encastrement des plaques 6 est tel que le clapet se trouve au repos plaqué sur la buse avec un certain effort pour obturer l'orifice 2. L'empilage de plaques 6 comprend un trou central 9 de positionnement du clapet et un certain nombre de rainures radiales 10 qui s'étendent à partir du trou central jusqu'à une certaine distance de la périphérie des plaques. Ces rainures donnent de la flexibilité à l'ensemble de plaques 6 et permettent le passage, à travers celles-ci, du fluide après son laminage à la sortie de l'orifice de buse 2, comme cela est illustré par des flèches.

Un électro-aimant annulaire 12 composé d'un bobinage 13 et d'une carcasse 14 est disposé coaxialement aux plaques 6 du côté opposé à la buse 1, à une distance axiale prédéterminée pour permettre un déplacement axial de la partie centrale portant le clapet 5, des plaques, sous l'effet du jet de fluide arrivant dans la buse 1. L'électro-aimant 12, en attirant les plaques, fait varier l'effort d'application du clapet 5 sur l'orifice 2 de la buse. Pour un même débit, la pression générée en amont de l'orifice sera d'autant plus faible que l'attraction de l'électro-aimant sera élevée. On constate que l'empilage de plaques 6 est encastré entre la périphérie radialement extérieure 15 de la carcasse 14 et un élément annulaire 17 fixé sur ce bord périphérique.

On comprend aisément que le nombre et l'épaisseur des plaques 6 est choisi en fonction de la flexibilité de l'empilage que l'on souhaite obtenir. L'effort de plaquage du clapet 5 sur la buse 1 résulte de l'effort initial donné par l'empilage, diminué de la force d'attraction engendrée par l'électro-aimant lorsqu'il est excité.

Il est ainsi possible de moduler l'effet de laminage du fluide 3 s'écoulant à travers la buse, en modulant le courant envoyé dans la bobine 13 de l'électro-aimant.

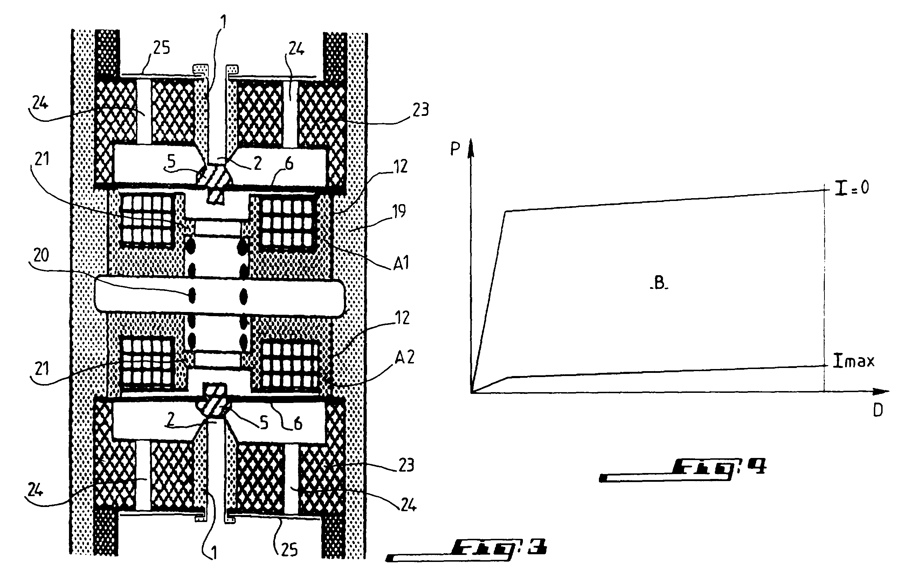

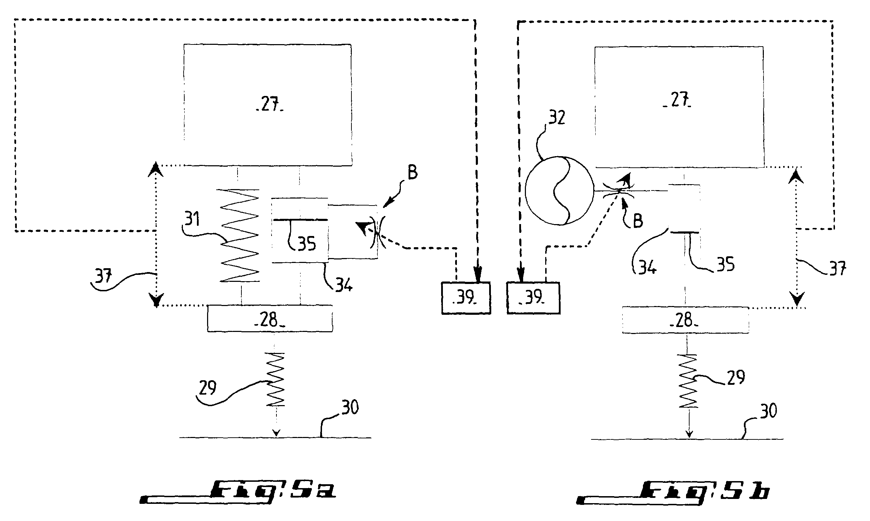

La figure 3 montre un agencement d'amortissement comprenant deux dispositifs de laminage selon la figure 1, qui sont disposés tête-bêche dans un corps de support 19. Les dispositifs de laminage portent les références A1 et A2. Les éléments constitutifs des dispositifs de laminage qui sont communs aux figures 1 et 3 portent les mêmes références.

Dans l'agencement selon la figure 3, les électro-aimants 12 des deux dispositifs A1 et A2 sont montés librement coulissants dans le corps 19. Un ressort hélicoïdal 20 est interposé entre les deux dispositifs en prenant appui sur deux collerettes internes 21 des carcasses. Chaque buse 1 est montée coaxialement dans un élément de support 23 fixé lui-même coaxialement dans le corps 19. Chaque élément de support est axialement traversé par un certain nombre de canaux axiaux 24. Un diaphragme mince 25, de forme circulaire et percé d'un trou central permettant le passage de la buse et la fixation à celle-ci, est fixé sur la surface frontale de chaque élément de support 23 de façon à obturer les canaux axiaux 24. Chaque diaphragme 25 joue le rôle d'un clapet anti-retour. Une pression très faible venant d'un canal 24 suffit à soulever le clapet 25. Par contre, une pression agissant sur l'autre face du diaphragme, c'est-à-dire la face extérieure, plaque le diaphragme contre l'élément de support 23 et oblige le liquide à passer par la buse 1.

Grâce à cet arrangement, chaque dispositif de laminage A1 et A2 ne fonctionne que dans un seul sens d'écoulement du fluide, l'écoulement s'effectuant librement dans l'autre sens à travers les canaux axiaux 24.

En commandant les courants électriques dans les bobines 13 des dispositifs de laminage A1 etA2, il est donc possible de contrôler, dans chaque sens de l'écoulement, la perte de charge, en fonction du débit, dans tout un domaine de fonctionnement, comme l'indique la figure 4. Cette figure montre le domaine de fonctionnement B entre un courant d'excitation de bobine I = 0 et un courant maximal Iₘₐₓ, les axes d'abscisse et d'ordonnée représentant respectivement le débit D du fluide et la pression P.

Pour obtenir une bonne efficacité de l'agencement, dans des conditions normales de fonctionnement, la course possible de l'empilage des plaques 6 est faible. En cas de surpression accidentelle, le diaphragme formé par l'empilage des plaques 6 vient au contact de la carcasse 14 de l'électro-aimant associé et fait coulisser celui-ci dans le corps 19 en comprimant le ressort 20. Le passage de fluide est libéré. La faible inertie du diaphragme 6 et du clapet 5 assure une réponse de cet organe à une fréquence élevée, par exemple supérieure à 100 Hz.

On comprend aisément qu'un calculateur électronique, recevant des signaux appropriés, peut commander de façon continue les courants d'excitation des électro-aimants 12 et donc établir la perte de charge désirée dans l'agencement d'amortissement.

Les figures 5a et 5b illustrent, à titre d'exemple, l'utilisation d'un agencement selon l'invention pour l'amortissement d'une suspension automobile respectivement à ressort métallique et à ressort pneumatique.

Les figures schématisent la suspension d'une roue de véhicule automobile. Sur les figures, les références 27 et 28 désignent respectivement la masse suspendue, c'est-à-dire la caisse du véhicule, et la masse non suspendue, constituée par la roue et une partie de l'essieu. L'élément 29 symbolise le pneumatique interposé entre la masse 28 et le sol 30. Le système de suspension composé d'un ressort métallique 31 sur la figure 5a et d'un ressort pneumatique 32 sur la figure 5b et d'un système de déplacement de liquide 34 dont le piston est indiqué en 35 est interposé entre la masse suspendue 27 et la masse non suspendue 28.

Dans la suspension à ressort métallique de la figure 5a, l'agencement d'amortissement B par exemple selon la figure 3 est représenté schématiquement à l'extérieur du système 34. Mais, il pourrait aussi être intégré au piston 35.

Dans la suspension à ressort pneumatique 32 de la figure 5b, l'agencement d'amortissement B est inséré dans le circuit hydraulique entre le ressort 32 et le cylindre du système 34.

Dans l'application illustrée sur les figures 5a et 5b l'agencement d'amortissement selon l'invention est utilisé pour l'amortissement des mouvements relatifs de la masse non suspendue 28 et de la caisse du véhicule constituant la masse suspendue 27, dus aux inégalités du sol 30. Un capteur de déplacement symbolisé en 37 mesure de façon permanente l'élongation du ressort de suspension 31 ou 32 et envoie les valeurs de mesure à un calculateur 39 qui détermine à chaque instant la valeur optimale de la force d'amortissement de façon à, d'une part, filtrer au mieux la transmission à la caisse 27 des efforts engendrés par les mouvements de la roue dus aux inégalités du sol 30, et, d'autre part, assurer que la force de contact du pneumatique avec le sol soit maximale, afin d'assurer la tenue de route du véhicule.

Le calcul de la force d'amortissement sera réalisé par exemple suivant une loi CRONE ("Commande Robuste d'Ordre Non Entier"), selon laquelle l'effort est soit nul, soit proportionnel à une dérivée temporelle d'ordre non entier réel de la longueur du ressort de suspension. Cette loi est décrite dans le brevet français No. 2 660 386.

Il est à noter que l'agencement d'amortissement selon l'invention peut être utilisé dans tout autre système de suspension d'une masse dans lequel un liquide est mis en mouvement et laminé pour créer une force d'amortissement, par exemple la suspension d'un moteur à pistons sur la caisse d'un véhicule automobile, où sont utilisés des supports en caoutchouc séparés en deux chambres remplies de fluide, les mouvements du moteur entraînant le passage du fluide d'une chambre à l'autre. Ce débit de fluide peut être contrôlé par l'agencement tel que décrit ci-dessus et représenté aux figures.

L'utilisation d'une plaque ou d'un empilement de plaques minces, comme diaphragme est particulièrement avantageuse, car cela permet d'avoir une masse très faible, donc une faible inertie et une fréquence de réponse très rapide. On peut faire varier très rapidement le taux d'amortissement, ce qui est particulièrement intéressant dans le cas de l'application à une suspension automobile car on peut s'adapter pratiquement instantanément aux conditions de roulage. L'utilisation d'un empilement de plaques minces est préférable car un tel empilement se déforme plus facilement qu'une plaque unique dont l'épaisseur serait égale à celle de l'empilement.

## Revendications

1. Agencement d'amortissement des mouvements d'une masse par rapport à un support auquel elle est reliée par l'intermédiaire d'un dispositif de suspension pourvu d'au moins un ressort et de moyens d'amortissement hydrauliques, du type mettant en mouvement du fluide hydraulique et comprenant au moins un dispositif de laminage de ce fluide par au moins un orifice (2) à travers lequel le fluide est amené à s'écouler, le dispositif de laminage comportant des moyens de variation en continu des caractéristiques d'amortissement par contrôle du degré d'ouverture de l'orifice, qui comprennent au moins une plaque (6) formant diaphragme, disposée perpendiculairement à l'orifice (2) et portant un clapet (5) dont l'effort d'application sur l'orifice est variable et des moyens de commande (12) de la variation de cet effort, la plaque (6) étant flexible et encastrée par ses bords dans une structure de support (17, 19) de manière à être déformable élastiquement en direction de l'orifice (2), caractérisé en ce que la plaque (6) est configurée pour permettre le passage du fluide à travers la plaque en aval de l'orifice.

2. Agencement selon la revendication 1, caractérisé en ce que les moyens de commande (12) de la variation de l'effort d'application du clapet (5) sur l'orifice (2) comprennent un électro-aimant (12) et la plaque (6) est en un matériau magnétique et disposée dans le champ magnétique de l'électro-aimant de façon à codifier l'effort d'application sous l'effet de la force produite par ce dernier.

3. Agencement selon la revendication 2, caractérisé en ce que la plaque (6) est précontrainte de façon à être sollicitée élastiquement vers l'orifice (2).

4. Agencement selon l'une des revendications précédentes, caractérisé en ce que la plaque (6) comporte des lumières radiales (10) donnant de la flexibilité à la plaque et permettant le passage du fluide sortant de l'orifice (2).

5. Agencement selon l'une des revendications précédentes, caractérisé en ce qu'il comporte plusieurs plaques flexibles (6) empilées les unes sur les autres.

6. Agencement selon l'une des revendications précédentes, caractérisé en ce qu'il comprend deux dispositifs de variation de laminage (A1, A2) montés tête-bêche dans un corps de support (19), chaque dispositif étant réalisé sous forme d'un dispositif à écoulement de fluide unidirectionnel.

7. Agencement selon la revendication 6, caractérisé en ce que chaque dispositif (A1, A2) comporte un corps de support (23) de la buse (1), pourvu de canaux de passage (24) parallèles au canal de la buse et auquel est associé un diaphragme (25) d'interdiction d'un écoulement de fluide à travers les canaux (24) dans le même sens que l'écoulement de fluide à travers ladite buse (1).

8. Agencement selon l'une des revendications 6 ou 7, caractérisé en ce que les dispositifs (A1, A2) sont montés tête-bêche dans le support (19) de façon axialement mobile à l'encontre d'un ressort (20) interposé entre les deux dispositifs.

9. Agencement selon l'une des revendications 1 à 8, caractérisé en ce que la force d'amortissement est déterminée selon une loi du type Crone.

10. Système de suspension, notamment de véhicule automobile, du type à ressort (31, 32) et système de déplacement de liquide (34) avantageusement à piston (35) montés entre la caisse (27) du véhicule et le support (28) formé par la roue et une partie de l'essieu, caractérisé en ce qu'un agencement d'amortissement selon l'une des revendications 1 à 9 est associé au système (34).

11. Système de suspension, du type à ressort métallique, selon la revendication 10, caractérisé en ce que l'agencement d'amortissement est monté sur le système (34), le cas échéant, intégré au piston (35) de celui-ci.

12. Système de suspension, du type à ressort pneumatique (32), selon la revendication 10, caractérisé en ce que l'agencement d'amortissement est inséré dans le circuit hydraulique entre le ressort pneumatique (32) et le cylindre du système (34).

## Patentansprüche

1. Einrichtung zur Dämpfung von Bewegungen einer Masse im Verhältnis zu einer Unterlage, mit der sie mittels einer Aufhängungsvorrichtung verbunden ist, ausgestattet mit wenigstens einer Feder und hydraulischen Stoßdämpfungsmitteln von der Art, die die hydraulische Flüssigkeit in Bewegung bringt und wenigstens eine Schichtungsvorrichtung für diese Flüssigkeit durch wenigstens eine Öffnung (2) beinhaltet, durch die die Flüssigkeit zum Abfließen gebracht wird, wobei die Schichtungsvorrichtung Endlosvariationsmittel mit Dämpfungseigenschaften durch die Kontrolle des Öffnungsgrades der Öffnung umfaßt, die wenigstens eine eine Membran bildende Platte (6) beinhalten, die senkrecht zur Öffnung (2) angebracht ist und eine Klappe (5) trägt, deren Anwendungsbelastung auf die Öffnung variabel ist und Steuermittel (12) für die Variation dieser Belastung, wobei die Platte (6) flexibel und durch ihre Seiten in einer Struktur der Unterlage (17, 19) derart festgeklemmt ist, daß sie in Richtung der Öffnung (2) elastisch verformbar ist, dadurch gekennzeichnet, daß die Platte (6) eingestellt ist, um den Durchfluß der Flüssigkeit durch die Platte unterhalb der Öffnung zu erlauben.

2. Einrichtung gemäß Anspruch 1, dadurch gekennzeichnet, daß die Steuermittel (12) der Variation der Anwendungsbeanspruchung der Klappe (5) auf der Öffnung (2) einen Elektromagneten (12) umfassen und die Platte (6) aus einem magnetischen Material besteht und derart in dem Magnetfeld des Elektromagneten angebracht ist, daß die Anwendungsbeanspruchung unter der Wirkung der durch diesen letzteren erzeugte Kraft verändert wird.

3. Einrichtung gemäß Anspruch 2, dadurch gekennzeichnet, daß die Platte (6) derart mechanisch vorgespannt ist, daß sie elastisch zur Öffnung (2) beansprucht wird.

4. Einrichtung gemäß einem der vorherigen Ansprüche, dadurch gekennzeichnet, daß die Platte (6) radiale Schlitzlöcher umfaßt, die der Platte Flexibilität verleihen und den Durchfluß der aus der Öffnung (2) austretenden Flüssigkeit erlauben.

5. Einrichtung gemäß einem der vorherigen Ansprüche, dadurch gekennzeichnet, daß sie mehrere flexible Platten (6) umfaßt, die übereinander gestapelt sind.

6. Einrichtung gemäß einem der vorherigen Ansprüche, dadurch gekennzeichnet, daß sie zwei Variationsschichtungsvorrichtungen (A1, A2) umfaßt, die jede umgekehrt in einem Stützkörper (19) untergebracht sind, wobei jede Vorrichtung in Form einer Vorrichtung zum Abfluß der Flüssigkeit in einer einzigen Richtung realisiert wird.

7. Einrichtung gemäß Anspruch 6, dadurch gekennzeichnet, daß jede Vorrichtung (A1, A2) einen Stützkörper (23) der Düse (1) umfaßt, der mit Durchgangskanälen (24) parallel zum Kanal der Düse versehen ist und dem eine Verschlußmembran (25) gegen das Abfließen der Flüssigkeit durch die Kanäle (24) in der gleichen Richtung wie der Abfluß der Flüssigkeit durch besagte Düse (1) beigefügt ist.

8. Einrichtung gemäß einem der Ansprüche 6 oder 7, dadurch gekennzeichnet, daß die Vorrichtungen (A1, A2) umgekehrt axial mobil gegen eine zwischen die zwei Vorrichtungen eingebrachte Feder (20) in die Unterlage (19) angebracht sind.

9. Einrichtung gemäß einem der Ansprüche 1 bis 8, dadurch gekennzeichnet, daß die Kraft der Dämpfung gemäß einem Gesetz der Art Crone bestimmt wird.

10. Aufhängungssystem, insbesondere eines Kraftfahrzeugs, der Art mit Federn (31, 32) und Fortbewegungssystem von Flüssigkeiten (34), vorteilhaft mit Kolben (35), eingebaut zwischen dem Gehäuse (27) des Fahrzeugs und der durch das Rad und einen Teil der Achse gebildeten Stütze (28), dadurch gekennzeichnet, daß eine Einrichtung zur Dämpfung gemäß einem der Ansprüche 1 bis 9 dem System (34) beigefügt ist.

11. Aufhängungssystem der Art mit Metallfeder, gemäß Anspruch 10, dadurch gekennzeichnet, daß die Einrichtung zur Dämpfung auf dem System (34) aufgebaut ist und ggf. in den Kolben (35) desselben integriert ist.

12. Aufhängungssystem der Art mit pneumatischen Federn (32) gemäß Anspruch 10, dadurch gekennzeichnet, daß die Einrichtung zur Dämpfung in den hydraulischen Kreislauf zwischen der pneumatischen Feder (32) und dem Zylinder des Systems (34) eingefügt ist.

## Claims

1. Arrangement for damping the movements of a weight with respect to a support to which it is connected by means of a suspension device provided with at least one spring and hydraulic damping means of the type moving the hydraulic fluid and including at least one device for laminating this fluid via at least one orifice (2) through which the fluid is to flow, the lamination device comprising means for continuously varying the damping characteristics by controlling the degree of opening the orifice which include at least one plate (6) forming a diaphragm disposed perpendicular to the orifice (2) and bearing a valve (5) whose application force on the orifice can be varied, and means (12) for controlling variation of this force, the plate (6) being flexible and embedded via its edges in a support structure (17, 19) so as to be elastically ductile in the direction of the orifice (2), characterised in that the plate (6) is configured to allow the fluid to pass through the plate downstream of the orifice.

2. Arrangement according to claim 1, characterised in that the means (12) for controlling variation of the application force of the valve (5) on the orifice (2) include an electromagnet (12) and the plate (6) is made of a magnetic material and placed inside the magnetic field of the electromagnet so as to modify the application force under the effect of the force produced by the latter.

3. Arrangement according to claim 2, characterised in that the plate (6) is prestressed so as to be elastically stressed towards the orifice (2).

4. Arrangement according to one of the preceding claims, characterised in that the plate (6) comprises radial slits (10) providing the plate with flexibility and allowing the fluid coming out of the orifice (2) to pass.

5. Arrangement according to one of the preceding claims, characterised in that it comprises several flexible plates (6) stacked on top of one another.

6. Arrangement according to one of the preceding claims, characterised in that it includes two lamination variation devices (A1, A2) mounted head to tail in a support body (19), each device being embodied in the form of a unidirectional fluid flow device.

7. Arrangement according to claim 6, characterised in that each device (A1, A2) comprises a support body (23) of the nozzle (1) provided with passage channels (24) parallel to the channel of the nozzle and associated with a diaphragm (25) prohibiting a flow of fluid through the channels (24) in the same direction as the fluid flow through said nozzle (1).

8. Arrangement according to claim 6 or 7, characterised in that the devices (A1, A2) are mounted head to tail in the support (19) axially mobile against a spring (20) inserted between the two devices.

9. Arrangement according to one of claims 1 to 8, characterised in that the damping force is determined according to a Crone type law.

10. Suspension system, especially of a motor vehicle, of the spring type (31, 32) and a liquid movement system (34), preferably with a piston, (35) mounted between the body (27) of the vehicle and the support (28) formed by the wheel and a portion of the axle, characterised in that a damping arrangement according to one of claims 1 to 9 is associated with the system (34).

11. Suspension system of the metal spring type according to claim 10, characterised in that the damping arrangement is mounted on the system (34) and, if appropriate, integrated with the piston (35) of the latter.

12. Suspension system of the pneumatic spring type (32) according to claim 10, characterised in that the damping arrangement is inserted in the hydraulic circuit between the pneumatic spring (32) and the cylinder of the system (34).
